# NEUE EUROPÄISCHE PATENTSCHRIFT

(11) **EP 2 129 883 B2**
(45) Veröffentlichungstag und Bekanntmachung des Hinweises auf die Entscheidung über den Einspruch: **23.11.2022**
(45) Hinweis auf die Patenterteilung: 16.09.2015
(21) Anmeldenummer: 08734586.4
(22) Anmeldetag: 20.02.2008
(51) Int. Cl.: F01N 3/035, F01N 3/20, F01N 3/28

(54) **KATALYSATORSYSTEM UND SEINE VERWENDUNG**
CATALYST SYSTEM AND USE THEREOF
SYSTÈME DE CATALYSEUR ET UTILISATION

(30) Priorität: 21.02.2007 DE 102007008954
(43) Veröffentlichungstag der Anmeldung: 09.12.2009
(73) Patentinhaber: Umicore AG & Co. KG, 63457 Hanau-Wolfgang (DE)
(72) Erfinder: SPURK, Paul, 64331 Weiterstadt (DE); FRANTZ, Stéphanie, 63457 Hanau (DE); LE TALLEC, Thomas, F-78500 Sartrouville (FR); TEYSSET, Olivier, F-78300 Poissy (FR); MUELLER, Wilfried, 61184 Karben (DE); JESKE, Gerald, 63543 Neuberg (DE)
(74) Vertreter: Retzow, Stefan
(86) Internationale Anmeldenummer: PCT/EP2008/001298
(87) Internationale Veröffentlichungsnummer: WO 2008/101675

(56) Entgegenhaltungen:
- EP-A- 0 341 832
- EP-A2- 1 640 056
- DE-A1-102005 017 378
- DE-A1-102007 034 709
- DE-B4-102005 017 378
- US-A- 5 829 250
- US-A1- 2003 099 583
- US-B1- 6 877 313
- DATABASE SAE 940936 [Online] 3 March 1994 (1994-03-03), H. Bressler, H. Weltens, F. Terres: "multiple disc catalytic converters-an innovative approach for improved conversion at lower cost", XP007922498,

## Beschreibung

Die vorliegende Erfindung betrifft ein Katalysatorsystem und seine Verwendung für die Reinigung der Abgase eines Verbrennungsmotors, welches in einem gemeinsamen Konvertergehäuse wenigstens zwei Katalysatoren enthält, die in Strömungsrichtung des Abgases hintereinander und mit einem Abstand voneinander angeordnet sind und die in einem mageren Abgas Kohlenwasserstoffe und Kohlenmonoxid katalytisch verbrennen können. Das Katalysatorsystem wird in der Abgasanlage eines Dieselmotors zur Aufheizung des Abgases auf eine Rußzündtemperatur zur aktiven Regeneration eines nachgeschalteten Rußfilters eingesetzt.

Der von Dieselmotoren erzeugte Ruß muß zur Luftreinhaltung durch Rußfilter aus dem Abgas entfernt werden. Mit zunehmender Ablagerung von Ruß im Filter steigt der vom Filter erzeugte Abgasgegendruck an und vermindert die Leistung des Motors. Das Filter muß daher regelmäßig durch Verbrennen des Rußes regeneriert werden.

Die Regeneration bereitet besonders bei modernen Dieselmotoren ein Problem, da das Abgas dieser Motoren im Normalbetrieb zu kalt ist, um die Verbrennung des Rußes auf dem Filter zu zünden. Hierfür wären Abgastemperaturen von 500 bis 700 °C notwendig.

Für die Regeneration von Rußfiltern sind passive und aktive Verfahren bekanntgeworden. Bei den passiven Verfahren wird zum Beispiel gemäß der EP 0 341 832 A2 ein Rußfilter kontinuierlich durch Stickstoffdioxid als Oxidationsmittel bei Abgastemperaturen unterhalb von 400 °C oxidiert. Hierzu ist vor dem Rußfilter ein Oxidationskatalysator angeordnet, der das im Abgas vorhandene Stickstoffmonoxid zu Stickstoffdioxid umsetzt. Dieses Verfahren setzt voraus, daß das Abgas genügend Stickstoffmonoxid enthält. Nachteilig ist, daß die Anwesenheit von Kohlenwasserstoffen im Abgas die Oxidation von Stickstoffmonoxid zu Stickstoffdioxid behindert. Diesem Mangel kann gemäß der US 6,877,313 B1 dadurch abgeholfen werden, daß vor dem Rußfilter zwei Oxidationskatalysatoren angeordnet werden, wobei der erste Katalysator im wesentlichen die Kohlenwasserstoffe im Abgas verbrennt und der zweite Katalysator die im Abgas verbliebenen Stickoxide zu Stickstoffdioxid oxidiert.

Passive Verfahren können einen ausfallsicheren Betrieb des Rußfilters nicht gewährleisten. Wenigstens von Zeit zu Zeit muß das Filter aktiv regeneriert werden. Zu diesem Zweck wird vor dem Oxidationskatalysator Kraftstoff in den Abgasstrom eingedüst und auf dem Oxidationskatalysator verbrannt oder es wird durch motorische Maßnahmen die Konzentration von unverbrannten Kohlenwasserstoffen im Abgas angehoben. Die katalytische Verbrennung im Oxidationskatalysator muß das Abgas je nach augenblicklichem Betriebszustand des Motors um 200 bis 400 °C auf die Rußzündtemperatur aufheizen. Dabei treten im Innern des Oxidationskatalysators hohe Temperaturspitzen auf, die zu einer vorzeitigen Alterung des Katalysators führen können. Als Folge davon verschlechtert sich mit zunehmender Betriebsdauer die Umsetzung der Kohlenwasserstoffe und von Kohlenmonoxid am Oxidationskatalysator.

Die DE 10 2005 017 378 A1 beschreibt eine Abgasreinigungsvorrichtung mit einem Katalysatorkörper, der in Strömungsrichtung des Abgases aus mehreren hintereinander angeordneten Katalysatorscheiben besteht. Die Katalysatorscheiben bestehen aus einem gesinterten Metallpulver zur Umsetzung der im Abgas enthaltenen Kohlenwasserstoffe, Kohlenmonoxid und Stickoxide zu Kohlendioxid, Wasser und Stickstoff. Der Abstand zwischen den Katalysatorscheiben beträgt etwa 3 mm.

Die US 2003/0099583 A1 beschreibt eine Abgasreinigungsvorrichtung, die einen Dreiweg-Katalysator A zur Umsetzung von Kohlenwasserstoffen, Kohlenmonoxid und Stickoxiden im stöchiometrischen Abgas enthält sowie einen stromabwärts angeordneten Katalysator B, welcher Zeolithe zur Absorption von Kohlenwasserstoffen aufweist.

Dokument JP 2006 329020 A offenbart ein Katalysatorsystem für die Reinigung der Abgase eines Verbrennungsmotors enthaltend in einem gemeinsamen Konvertergehäuse wenigstens zwei Katalysatoren, die in Strömungsrichtung des Abgases hintereinander und mit einem Abstand d voneinander angeordnet sind und die in einem mageren Abgas Kohlenwasserstoffe und Kohlenmonoxid katalytisch verbrennen können, gefolgt von einem zweiten Konvertergehäuse mit einem Rußfilter.

Es ist Aufgabe der vorliegenden Erfindung, ein Katalysatorsystem anzugeben, welches eine geringere Alterung bei der katalytischen Verbrennung von Kohlenwasserstoffen im Abgas aufweist und daher mit Vorteil bei der aktiven Regeneration von Rußfiltern eingesetzt werden kann.

Diese Aufgabe wird durch ein Katalysatorsystem gemäß Anspruch 1 gelöst.

Es hat sich gezeigt, daß die Alterung eines Katalysators bei der katalytischen Verbrennung verlangsamt werden kann, wenn er in wenigstens zwei Einzelkatalysatoren aufgeteilt wird und diese in einem engen Abstand von nur wenigen Millimetern zueinander angeordnet werden. Dieses Ergebnis ist überraschend, da der geringe Abstand von nur wenigen Millimetern zwischen den aufeinanderfolgenden Katalysatoren das Abgas nicht abkühlen kann. Offensichtlich wird durch die Auftrennung der Katalysatoren die Temperaturverteilung in den Katalysatoren positiv beeinflußt. Dadurch werden Temperaturspitzen vermieden, die zur schnellen Alterung des Katalysators führen würden.

Die zur katalytischen Verbrennung benötigten Kohlenwasserstoffe können entweder mit Hilfe einer vor dem ersten Katalysator angeordneten Dosiereinrichtung in den Abgasstrom eingesprüht werden oder der Anteil unverbrannter Kohlenwasserstoffe im Abgas des Motors kann durch motorische Maßnahmen erhöht werden, zum Beispiel durch Nacheinspritzen von Kraftstoff in die Zylinder des Motors.

Für das Katalysatorsystem sind alle Katalysatoren geeignet, die im mageren Abgas Kohlenwasserstoffe oxidieren können. Dabei handelt es sich um Oxidationskatalysatoren und Dreiwegkatalysatoren, die auch in Kombination eingesetzt werden können.

Die Katalysatoren enthalten eine auf einem keramischen oder metallischen Wabenkörper aufgebrachte oxidationsaktive Katalysatorschicht, die wenigstens ein Edelmetall aus der Gruppe Platin, Palladium und Rhodium auf Trägermaterialien aus der Gruppe aktives Aluminiumoxid, Siliziumoxid, Titanoxid, Zirkonoxid, Ceroxid und Mischungen oder Mischoxiden davon enthält. Zur Speicherung von Kohlenwasserstoffen kann die Katalysatorschicht zusätzlich Zeolithe aufweisen. Die beiden Katalysatoren weisen eine unterschiedliche Zusammensetzung auf.

Das Katalysatorsystem wird bevorzugt im Abgastrakt eines Dieselmotors verwendet zur Aufheizung des mageren Abgases auf eine Temperatur zwischen 500 und 700 °C hinter dem letzten Katalysator durch Verbrennen von Kraftstoff auf den Katalysatoren. Der hierfür benötigte Kraftstoff kann mit Hilfe der Dosiereinrichtung vor dem ersten Katalysator in den Abgasstrom eingedüst werden, wobei darauf zu achten ist, daß die Abgaszusammensetzung netto oxidierend bleibt. Alternativ kann der Anteil an unverbrannten Kohlenwasserstoffen im Abgas durch motorische Maßnahmen erhöht werden, zum Beispiel durch Nacheinspritzen von Kraftstoff in die Zylinder des Dieselmotors, wobei ebenfalls darauf zu achten ist, daß die Abgaszusammensetzung netto oxidierend bleibt. Mit dem auf diese Weise aufgeheizten Abgas kann ein hinter dem Katalysatorsystem angeordnetes Rußfilter aktiv regeneriert werden.

Zweck des vorgeschlagenen Katalysatorsystems ist es, durch Verbrennen von im Abgas enthaltenen oder separat zugeführten brennbaren Komponenten das Abgas bevorzugt auf eine Temperatur von mehr als 500 °C und bis zu 700 °C aufzuheizen. Im Abgas enthaltene brennbare Komponenten sind zum Beispiel unverbrannte oder unvollständig verbrannte Kohlenwasserstoffe aus dem Dieselkraftstoff und Kohlenmonoxid.

Der Abstand zwischen den beiden Katalysatoren führt überraschenderweise zu einer langsameren Alterung des Katalysatorsystems, was an einem besseren Umsatz von Kohlenmonoxid und Kohlenwasserstoffen nach Alterung erkennbar ist. Das erfindungsgemäße Katalysatorsystem weist also nach Alterung geringere Emissionen von Kohlenmonoxid und Kohlenwasserstoffen auf als ein entsprechender einstückiger Katalysator oder als zwei ohne Abstand hintereinander angeordnete Katalysatoren.

Der Abstand zwischen den Katalysatoren darf einerseits nicht zu klein sein, um den beobachteten Effekt zu gewährleisten; andererseits ist ein zu großer Abstand aus räumlichen und thermischen Gründen zu vermeiden, da mit größer werdendem Abstand das Abgas zwischen den Katalysatoren gekühlt wird. Für gängige Querschnittsabmessungen von Autoabgaskatalysatoren mit Durchmessern zwischen 10 und 20 Zentimetern hat sich ein Abstand zwischen den beiden Katalysatoren von 2 bis 30 mm bewährt. Bevorzugt wird ein Abstand zwischen 5 und 20 mm gewählt.

Der Abstand zwischen den beiden Katalysatoren hat allerdings nur einen Einfluß auf die Alterung des bezogen auf die Abgasströmung hinteren Katalysators. Um die Alterungsstabilität des vorderen Katalysators zu erhöhen, sollte daher ein möglichst temperaturstabiles Katalysatorsystem gewählt werden. Erfahrungsgemäß widersteht ein Katalysator, der Platin in Kombination mit Palladium enthält, hohen Temperaturen besser als ein reiner Platin-Katalysator. Bevorzugt sollte das Platin/Palladium-Verhältnis des ersten beziehungsweise vorderen Katalysators zwischen 4:1 und 1:1 liegen. Der zweite Katalysator hat die Aufgabe, das vom ersten Katalysator nicht vollständig umgesetzte Kohlenmonoxid und die Kohlenwasserstoffe möglichst vollständig zu verbrennen. Für diese Aufgabe ist ein Platin/Palladium-Katalysator mit einem geringeren Palladium-Gehalt als im ersten Katalysator geeignet.

Die Katalysatorschichten der beiden Katalysatoren weisen also voneinander abweichende Zusammensetzungen auf, um ihrer jeweiligen Funktion im Katalysatorsystem optimal gerecht zu werden.

Die Rohemissionen eines Dieselmotors während der Kaltstartphase bestehen im wesentlichen aus unverbrannten Kohlenwasserstoffen. Während der Kaltstartphase können diese Komponenten von den noch kalten Katalysatoren nicht umgesetzt werden. Zur Verminderung dieser Emissionen können der vordere und/oder der hintere der beiden Katalysatoren des erfindungsgemäßen Katalysatorsystems Zeolithe enthalten, die die Kohlenwasserstoffe zwischenspeichern. Mit zunehmender Temperatur des Abgases werden die gespeicherten Kohlenwasserstoffe wieder desorbiert und können dann von den bei den höheren Temperaturen aktiven Katalysatoren umgesetzt werden.

Die Erfindung wird im folgenden an Hand des Beispiels und der beiden Figur näher erläutert. Es zeigt:
- **Figur 1:**: Aufbau einer Abgasanlage mit Rußfilter und erfindungsgemäßem Katalysatorsystem zur aktiven Regeneration des Filters
- **Figur 2:**: Vergleich der Emissionen von drei verschiedenen Katalysatorsystemen

Die Figur zeigt eine Abgasanlage (1) eines Dieselmotors. Die Abgasanlage enthält ein erstes Konvertergehäuse (2), in welchem sich zwei voneinander beabstandete oxidationsaktive Katalysatoren (3) und (4) befinden. Der Abstand d der beiden Katalysatoren liegt im Bereich zwischen 2 und 30 mm. Die beiden Katalysatoren können gleich oder unterschiedlich lang sein. Hinter dem Katalysatorsystem befindet sich ein zweites Konvertergehäuse (5) mit einem Rußfilter (6). Durch Verbrennen von zusätzlichem Kraftstoff im Katalysatorsystem kann das nachgeschaltete Rußfilter aktiv regeneriert werden.

### Beispiel

Es wurden drei verschiedene Katalysatorsysteme an einem Dieselfahrzeug mit 2,2 Liter Hubraum bezüglich ihrer Restemissionen im NEDC (New European Driving Cycle) miteinander verglichen. Als Katalysatorträger wurden jeweils Wabenkörper aus Cordierit mit einer Zelldichte von 62 cm⁻² und einer Dicke der Kanalwände von 0,17 mm verwendet, die mit einem konventionellen Diesel-Oxidationskatalysator mit 3,18 g Platin pro Liter Wabenkörpervolumen beschichtet wurden.

| | |
|---|---|
| System 1: | Einstückiger Wabenkörper Durchmesser 14,4 cm; Länge 8,9 cm |
| System 2: | Zwei Wabenkörper Durchmesser 14,4 cm; Länge jedes Wabenkörpers 4,45 cm; Abstand d zwischen den Wabenkörpern: 0,00 cm |
| System 3: | Zwei Wabenkörper gemäß Erfindung Durchmesser 14,4 cm; Länge jedes Wabenkörpers 4,45 cm; Abstand d zwischen den Wabenkörpern: 1 cm |

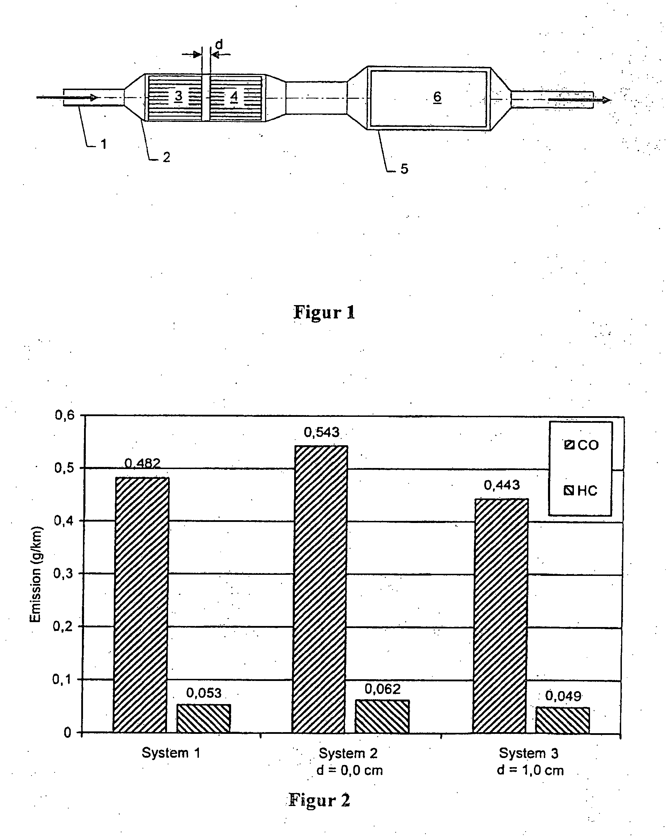

Die Katalysatorsysteme wurden 21 Stunden lang realitätsnah durch Nacheinspritzung gealtert. Danach wurden ihre Restemissionen an einem Dieselfahrzeug im NEDC vermessen. Die Ergebnisse sind in Figur 2 dargestellt.

Das erfindungsgemäße Katalysatorsystem 3 zeigt deutlich weniger CO- und HC-Emissionen während des Tests als das konventionelle, einstückige System 1 und das System 2 mit zwei Wabenkörpern ohne Abstand zwischen den Wabenkörpern.

## Patentansprüche

1. Katalysatorsystem für die Reinigung der Abgase eines Verbrennungsmotors enthaltend in einem gemeinsamen Konvertergehäuse (2) wenigstens zwei Katalysatoren (3) und (4), die in Strömungsrichtung des Abgases hintereinander und mit einem Abstand d voneinander angeordnet sind und die in einem mageren Abgas Kohlenwasserstoffe und Kohlenmonoxid katalytisch verbrennen können, gefolgt von einem zweiten Konvertergehäuse (5) mit einem Rußfilter (6),
**dadurch gekennzeichnet, dass**
der Abstand d zwischen zwei benachbarten Katalysatoren zwischen 2 und 30 mm beträgt und dass es sich bei den Katalysatoren (3, 4) um Oxidationskatalysatoren oder um eine Kombination aus Oxidationskatalysatoren und Dreiwegkatalysatoren handelt, und die Katalysatoren eine auf einem keramischen oder metallischen Wabenkörper aufgebrachte oxidationsaktive Katalysatorschicht enthalten, die wenigstens ein Edelmetall aus der Gruppe Platin, Palladium und Rhodium auf Trägermaterialien aus der Gruppe aktives Aluminiumoxid, Siliziumoxid, Titanoxid, Zirkonoxid, Ceroxid und Mischungen oder Mischoxiden davon enthält und
dass die Katalysatorschicht des in Strömungsrichtung des Abgases vorderen Katalysators (3) Platin in Kombination mit Palladium enthält und dass die Katalysatorschicht des in Strömungsrichtung des Abgases hinteren Katalysators (4) Platin in Kombination mit Palladium enthält, wobei der Palladiumgehalt geringer ist als im vorderen Katalysator.

2. Katalysatorsystem nach Anspruch 1,
**dadurch gekennzeichnet, dass**
vor dem ersten Katalysator (3) eine Dosiereinrichtung zum Einsprühen von Kraftstoff in das Abgas angeordnet ist.

3. Katalysatorsystem nach Anspruch 2,
**dadurch gekennzeichnet, dass** die Katalysatorschicht zusätzlich Zeolithe enthält.

4. Verwendung des Katalysatorsystem (2) nach einem der vorstehenden Ansprüche im Abgastrakt (1) eines Dieselmotors zur Aufheizung des mageren Abgases auf eine Temperatur zwischen 500 und 700 °C hinter dem letzten Katalysator (4) durch Verbrennen von Kraftstoff oder unverbrannten Kraftstoffanteilen aus dem Motor auf den Katalysatoren zur Regeneration eines hinter dem Katalysatorsystem angeordneten Rußfilters (6) mit dem vom Katalysatorsystem erzeugten heißen Abgasstrom.

5. Verwendung nach Anspruch 4,
**dadurch gekennzeichnet, dass** der Kraftstoff mit Hilfe der Dosiereinrichtung vor dem ersten Katalysator (3) in den Abgasstrom eingedüst wird.

6. Verwendung nach Anspruch 5,
**dadurch gekennzeichnet, dass** die unverbrannten Kraftstoffanteile im Abgas durch Nacheinspritzen von Kraftstoff in die Zylinder des Dieselmotors erzeugt werden.

## Claims

1. Catalyst system for cleaning the exhaust gases of an internal combustion engine, which system contains in a common converter housing (2) at least two catalysts (3) and (4), which are arranged one behind the other in the flow direction of the exhaust gas and at a distance d from one another, and which can catalytically burn hydrocarbons and carbon monoxide in a lean exhaust gas, followed by a second converter housing (5) having a soot filter (6),
**characterized in that**
the distance d between two adjacent catalysts is between 2 and 30 mm **and in that** the catalysts (3, 4) are oxidation catalysts or a combination of oxidation catalysts and three-way catalysts, and the catalysts contain an oxidation-active catalyst layer applied to a ceramic or metallic honeycomb body, which layer contains at least one noble metal from the group platinum, palladium, and rhodium on carrier materials from the group of active aluminum oxide, silicon oxide, titanium oxide, zirconium oxide, cerium oxide, and mixtures or mixed oxides thereof, **and**
**in that** the catalyst layer of the catalyst (3) that is upstream in the flow direction of the exhaust gas contains platinum in combination with palladium, **and in that** the catalyst layer of the catalyst (4) that is downstream in the flow direction of the exhaust gas contains platinum in combination with palladium, wherein the palladium content is lower than in the upstream catalyst.

2. Catalyst system according to claim 1,
**characterized in that**
a metering device for spraying fuel into the exhaust gas is arranged upstream of the first catalytic converter (3).

3. Catalyst system according to claim 2,
**characterized in that** the catalyst layer additionally contains zeolites.

4. Use of the catalyst system (2) according to one of the preceding claims in the exhaust gas tract (1) of a diesel engine for heating the lean exhaust gas to a temperature between 500 and 700°C downstream of the last catalyst (4) by burning fuel or unburned fuel components from the engine on the catalysts for regenerating a soot filter (6), arranged downstream of the catalyst system, with the hot exhaust gas flow produced by the catalyst system.

5. Use according to claim 4,
**characterized in that,** upstream of the first catalytic converter (3), the fuel is injected into the exhaust gas flow with the aid of the metering device.

6. Use according to claim 5,
**characterized in that** the unburned fuel components in the exhaust gas are generated by post-injection of fuel into the cylinders of the diesel engine.

## Revendications

1. Système de catalyseur pour la purification des gaz d'échappement d'un moteur à combustion interne contenant, dans un carter (2) de convertisseur commun, au moins deux catalyseurs (3) et (4), qui sont disposés l'un derrière l'autre dans le sens d'écoulement du gaz d'échappement et à une distance d l'un de l'autre et qui peuvent brûler de manière catalytique les hydrocarbures et le monoxyde de carbone dans un gaz d'échappement maigre, suivi d'un deuxième carter (5) de convertisseur présentant un filtre à suie (6),
**caractérisé en ce que**
la distance d entre deux catalyseurs voisins est comprise entre 2 et 30 mm **et en ce que** les catalyseurs (3, 4) sont des catalyseurs d'oxydation ou une combinaison de catalyseurs d'oxydation et de catalyseurs à trois voies et les catalyseurs contiennent une couche de catalyseur à action catalytique appliquée sur un corps en nid d'abeille céramique ou métallique, qui contient au moins un métal noble compris dans le groupe constitué par le platine, le palladium et le rhodium sur des matériaux de support compris dans le groupe constitué par l'oxyde d'aluminium, l'oxyde de silicium, l'oxyde de titane, l'oxyde de zirconium, l'oxyde de cérium actif et des mélanges ou des oxydes mixtes de ceux-ci **et**
**en ce que** la couche de catalyseur du catalyseur (3) avant dans le sens d'écoulement du gaz d'échappement contient du platine en combinaison avec du palladium **et en ce que** la couche de catalyseur du catalyseur (4) arrière dans le sens d'écoulement du gaz d'échappement contient du platine en combinaison avec du palladium, dans lequel la teneur en palladium est inférieure à celle du catalyseur avant.

2. Système de catalyseur selon la revendication 1,
**caractérisé en ce que**
un dispositif de dosage, destiné à injecter du carburant dans le gaz d'échappement, est disposé en amont du premier catalyseur (3).

3. Système de catalyseur selon la revendication 2,
**caractérisé en ce que** la couche de catalyseur contient en outre de la zéolite.

4. Utilisation du système de catalyseur (2) selon l'une quelconque des revendications précédentes dans le trajet (1) des gaz d'échappement d'un moteur diesel pour le chauffage du gaz d'échappement maigre à une température comprise entre 500 et 700°C en aval du dernier catalyseur (4) par combustion du carburant ou de proportions non brûlées du carburant provenant du moteur sur les catalyseurs, en vue de la régénération d'un filtre à suie (6) disposé en aval du système de catalyseur à l'aide du flux de gaz d'échappement chaud produit par le système de catalyseur.

5. Utilisation selon la revendication 4,
**caractérisée en ce que** le carburant est injecté à l'aide du dispositif de dosage en amont du premier catalyseur (3) dans le flux de gaz d'échappement.

6. Utilisation selon la revendication 5,
**caractérisée en ce que** les proportions non brûlées du carburant dans le gaz d'échappement sont produites par post-injection de carburant dans les cylindres du moteur diesel.
